# EUROPÄISCHE PATENTSCHRIFT

(11) **EP 0 632 047 B1**
(45) Veröffentlichungstag und Bekanntmachung des Hinweises auf die Patenterteilung: **20.09.2000**
(21) Anmeldenummer: 94109529.1
(22) Anmeldetag: 21.06.1994
(51) Int. Cl.: C07F 9/50

(54) **Verfahren zur Herstellung von sulfonierten Arylphosphinen**
Process for preparing sulfonated aryl phosphines
Procédé de préparation d'aryl phosphines sulfonées

(30) Priorität: 29.06.1993 DE 4321512; 23.12.1993 DE 4344066
(43) Veröffentlichungstag der Anmeldung: 04.01.1995
(73) Patentinhaber: Celanese Chemicals Europe GmbH, 60439 Frankfurt am Main (DE)
(72) Erfinder: Herrmann, Wolfgang A., Prof. Dr. Dipl.-Chem., D-85354 Freising (DE); Manetsberger, Rainer, Dr., D-82407 Wielenbach (DE); Albanese, Guido, Dipl.-Chem., D-80993 München (DE); Bahrmann, Helmut, Dr. Dipl.-Chem., D-46499 Hamminkeln (DE); Lappe, Peter, Dr. Dipl.-Chem., D-46539 Dinslaken (DE); Bergrath, Klaus, Dipl.-Ing., D-46147 Oberhausen (DE)

(56) Entgegenhaltungen:
- EP-A- 0 189 376
- EP-A- 0 491 240
- DE-A- 2 627 354
- GB-A- 1 471 265

## Beschreibung

Die Erfindung betrifft ein Verfahren zur Herstellung sulfonierter Arylphosphine durch Umsetzung von Arylphosphinen mit SO₃/H₂SO₄, d.h. einer Lösung von Schwefeltrioxid in konzentrierter Schwefelsaure (Oleum). Der neue Prozeß zeichnet sich durch Vermeidung von Nebenreaktionen, insbesondere die Bildung von Phosphinoxiden aus.

Komplexverbindungen, die als Zentralatom ein Metall der Gruppe VIII A des Periodensystems (IUPAC-Version) und als Liganden P(III)-Verbindungen wie Phosphine und daneben gegebenenfalls noch weitere zur Komplexbildung befähigte Gruppen enthalten, haben in den letzten Jahren zunehmend als Katalysatoren Bedeutung gewonnen. So erfolgt die technisch in großem Umfang ausgeübte Reaktion von Olefinen mit Synthesegas zu Aldehyden (Hydroformylierung) in Gegenwart von Katalysatoren, die aus Kobalt und insbesondere Rhodium und Triphenylphosphin bestehen. Entsprechend der Löslichkeit dieser Katalysatoren in organischen Medien verläuft die Reaktion in homogener Phase.

Statt in homogener Phase, kann man diese Umsetzung, wie auch andere stöchiometrische sowie katalytische Reaktionen, in heterogenen Reaktionssystemen durchfuhren. Diese eigenständige Entwicklung beschrankt sich nicht auf Komplexverbindungen von Metallen der Gruppe VIII A, sondern schließt auch Komplexverbindungen der Gruppen VII A und I B des Periodensystems (IUPAC-Version) als Katalysatoren ein. Der Einsatz in Wasser geloster Katalysatoren hat den Vorteil, sie einfach und schonend von dem in Wasser nicht löslichen Reaktionsprodukt abtrennen zu können.

Nach diesem Prinzip arbeitet z.B. das in der DE-C-27 00 904 beschriebene Verfahren zur Anlagerung von Cyanwasserstoff an eine ungesättigte organische Verbindung mit mindestens einer ethylenischen Doppelbindung. Als Katalysatoren sind für diese Reaktion Nickel/TPPTS [TPPTS steht für Tris(m-sulfophenyl)phosphin], Palladium/TPPTS oder Eisen/TPPTS geeignet. Für die Herstellung von Aldehyden durch Reaktion von Olefinen mit Kohlenmonoxid und Wasserstoff setzt man nach dem Prozeß der DE-C-26 27 354 Rhodium in metallischer Form oder in Form einer seiner Verbindungen zusammen mit einem wasserlöslichen Phosphin, z.B. TPPTS, als Katalysator ein. Weitere Katalysatoren der genannten Art und ihre Anwendung bei verschiedenen Reaktionen wie Hydrierungen, der Allen-Alkin-Kupplung und der Amin-Addition an Doppelbindungen sind z.B. Gegenstand der EP-A-372 313.

Sulfonierte Phenylphosphine erhält man nach einem in J.Chem.Soc., Jg. 1958, Seiten 281, 282 beschriebenen Verfahren durch Umsetzung von Triphenylphosphin mit Oleum, Erwärmen des Reaktionsgemisches auf einem Wasserbad, Verdünnen des Umsetzungsproduktes mit Wasser und Neutralisieren mit Natriumhydroxid. Aus dem Sulfonierungsgemisch kristallisiert das Natriumsalz des m-Sulfophenyl-diphenylphosphins aus.

Nach ähnlichen Verfahren gewinnt man auch Dinatriumsalze des Di(m-sulfophenyl)phenylphosphins und des Tri(m-sulfophenyl)phosphins. Einsatzstoff ist in beiden Fällen wiederum Triphenylphosphin, das mit Oleum bei Temperaturen zwischen 18 und 40°C in einem Zeitraum von 15 bis 63 Stunden umgesetzt wird. Das Reaktionsprodukt wird wiederum mit Wasser verdünnt und mit Natriumhydroxid neutralisiert, wobei darauf zu achten ist, daß während der Zugabe des Natriumhydroxids im Gemisch Temperaturen unterhalb 20°C eingehalten werden (DE-C-26 27 354).

Außer Monophosphinen werden auch sulfonierte Di- und Polyphosphine als Bestandteile von Katalysatoren verwendet. Beispiele für ihre Herstellung finden sich in der DE-A-40 40 314.

Ein Nachteil aller bekannten Verfahren zur Gewinnung sulfonierter Arylphosphine ist die unerwünschte Bildung von Phosphor-Sauerstoff-Verbindungen, d.h. die Oxidation des dreibindigen Phosphors zu fünfbindigem durch Schwefeltrioxid. Die resultierenden Phosphinoxide vermögen mit Metall-Ionen keine katalytisch aktiven Komplexbindungen einzugehen, sind also als Katalysatorkomponente wertlos. Sie werden daher üblicherweise aus dem Gemisch der Sulfonierungsprodukte selektiv abgetrennt, um die Katalysatorlösung nicht übermäßig durch inerte Stoffe zu belasten. Zur Begrenzung der Oxidation arbeitet man bei möglichst niedrigen Sulfonierungstemperaturen. Diese Maßnahme führt zur Bildung wasserlöslicher Phosphine, bei denen der maximal mögliche Sulfonierungsgrad und damit die höchste erzielbare Löslichkeit in Wasser, sie ist wichtig für den Rückhalt der Metallkomponente des Katalysatorsystems im Wasser, nicht erreicht wird. Einer weitergehenden Sulfonierung durch Verlängerung der Reaktionszeit steht die gleichzeitig zunehmende Oxidation entgegen.

Es bestand daher die Aufgabe ein Verfahren zu entwickeln, das die mit der Sulfonierung einhergehende Oxidation der eingesetzten Phosphine unterdrückt, dadurch höhere Reaktionstemperaturen und längere Reaktionszeiten und den Einsatz höherkonzentrierten Oleums erlaubt und so die Bildung hochsulfonierter Produkte fördert.

Die Erfindung besteht in einem Verfahren zur Herstellung sulfonierter Arylphosphine durch Sulfonierung Arylgruppen enthaltender Mono-, Di-, Oligo- oder Polyphosphine mit Oleum. Es ist dadurch gekennzeichnet, daß man die Sulfonierung bei Temperaturen zwischen 0 und 80°C in Gegenwart von Lewis-Säuren durchführt.

Überraschenderweise hat sich gezeigt, daß der Zusatz einer Lewis-Säure zum Sulfonierungsgemisch die Bildung von Phosphinoxiden wirksam verhindert. Die Sulfonierung kann daher bei höherer Temperatur und/oder über einen längeren Zeitraum als ohne Zusatz unter Erzielung eines höheren Sulfonierungsgrades durchgeführt werden. Überdies wird eine selektive Abtrennung im Reaktionsgemisch enthaltener Phosphinoxide in den meisten Fällen entbehrlich.

Der Begriff "Lewis-Säuren" ist dem Fachmann geläufig. Man versteht hierunter Moleküle oder Ionen, die als Elektronenakzeptoren wirken. Für den Einsatz im erfindungsgemäßen Verfahren wird ihre Gruppe auf jene beschränkt, die im Sulfonierungsmittel und unter den Sulfonierungsbedingungen beständig sind. Beispiele für Lewis-Säuren sind Borhalogenide, Borsäure, die Halogenide von Aluminium, Phosphor, Antimon, Arsen, Eisen, Zink und Zinn. Als besonders geeignet haben sich im neuen Prozeß Borverbindungen erwiesen, bevorzugt als leicht verfügbare, kostengünstige und nichttoxische Substanz, die Borsäure.

Man setzt die Lewis-Säure, bezogen auf die im zu sulfonierenden Phosphin enthaltenen P(III)-Atome etwa in äquimolaren Mengen ein. Ein geringer Unterschuß schadet nicht, ein Überschuß wird jedoch bevorzugt. Bei Verwendung von Borsäure als Lewis-Säure ist es besonders vorteilhaft, sie bis zur Sättigung im Oleum zu lösen. Die Lewis-Säuren können als einheitliche Verbindung oder aber auch als Gemisch verschiedener Verbindungen angewandt werden.

Ausgangsverbindungen für die Sulfonierung sind Arylphosphine. Unter dieser allgemeinen Bezeichnung werden Mono-, Di-, Oligo- und Polyphosphine verstanden, die mindestens einen aromatischen Rest enthalten, der sulfoniert werden kann. Der aromatische Rest kann aus einem oder mehreren Benzolringen bestehen, die, wie Biphenyl, durch eine einfache C-C-Bindung verbunden sind oder deren Kohlenstoffringe mehrere gemeinsame Kohlenstoffatome aufweisen (kondensierte Ringsysteme), wie die Naphthylgruppe. Die aromatischen Reste können weiterhin ein- oder mehrfach substituiert sein, z.B. durch Chlor-, Fluor-, Alkyl-, Alkoxy- und Nitrogruppen. Beispiele für Monophosphine, die nach dem neuen Prozeß sulfoniert werden können, sind Dimethylphenyl-, Methyldiphenyl- und Triphenylphosphin. Die Gruppe der Diphosphine wird beispielhaft durch das 2,2'-Bis(diphenylphosphinomethyl)-biphenyl und das 2,2'-Bis(diphenylphosphinomethyl)-1,1'-binaphthyl beschrieben. Unter Phosphinen werden auch Verbindungen des dreibindigen Phosphors verstanden, in denen das Phosphoratom Bestandteil eines Ringsystems ist. Für diese Verbindungsklassen stehen als Beispiele durch aromatische Reste substituiertes Phosphorbenzol, ferner aryl- und/oder alkylsubstituierte Phosphole und Phosphanorbornadiene.

Der Sulfonierung nach dem erfindungsgemäßen Verfahren sind Arylphosphine in handelsüblicher oder in der bei der Synthese anfallenden Form zugänglich. Eine besondere Reinigung ist entbehrlich, es sei denn, die Verwendung der sulfonierten Verbindungen als Katalysatorbestandteil erfordert sie. Als Sulfonierungsmittel verwendet man Oleum mit einer SO₃-Konzentration von 20 bis 65 Gew.-%, bezogen auf die Lösung, dem zweckmäßig bereits vor Eintragen des Arylphosphins die Lewis-Säure zugesetzt worden war. In die Lösung gibt man unter Einhaltung einer Temperatur von -5 bis +50°C, vorzugsweise 0 bis +40°C das Phosphin, wobei man z.B. durch Rühren für eine schnelle und gleichmäßige Verteilung der Phosphorverbindung im Sulfonierungsmittel sorgt, um lokale Überhitzungen zu vermeiden. Statt in Substanz wird das Phosphin vorzugsweise als Lösung in konzentrierter Schwefelsäure mit dem Oleum gemischt, zweckmäßig indem man der Lösung, die auch die Lewis-Säure enthält, Oleum anteilsweise und unter Rühren zusetzt. Das molare Verhältnis von SO₃ zu Phosphin richtet sich nach dem gewünschten Sulfonierungsgrad. Je höher das SO₃-Angebot unter sonst identischen Reaktionsbedingungen ist, desto mehr Sulfonsäuregruppen treten in das Phosphinmolekül ein. Die sich an das Lösen des Phosphins im Oleum anschließende eigentliche Sulfonierungsreaktion erfolgt bei Temperaturen zwischen 0 und 80°C, vorzugsweise 10 und 50°C, ebenfalls unter ständigem Rühren, um im Reaktionsgemisch eine möglichst gleichmäßige Temperatur aufrechtzuerhalten. Die Reaktionszeit kann sich auf wenige Minuten beschränken, im allgemeinen beträgt sie mehrere Stunden bis mehrere Tage, in Sonderfällen auch mehrere Wochen. Erhöhung der Reaktionstemperatur und Verlängerung der Reaktionszeit führen bei gleichem SO₃-Angebot zu vermehrter Sulfonierung der Arylreste des Phosphinmoleküls. Es verdient hervorgehoben zu werden, daß man durch Zusatz von Lewis-Säuren zum Sulfonierungsgemisch entsprechend der Erfindung die maßgebenden Reaktionsparameter, insbesondere SO₃-Konzentration, Temperatur und Reaktionszeit, innerhalb der vorgegebenen Grenzen weitgehend frei wählen kann. Denn die Oxidation als unerwünschte Nebenreaktion tritt kaum in Erscheinung. In diesem Zusammenhang hat es sich bewährt, den Fortgang der Sulfonierung analytisch zu überwachen, um die Reaktionsparameter zur Optimierung der Umsetzung aufeinander abzustimmen. Eine geeignete empfindliche und aussagekräftige Methode hierfür ist die ³¹P-Kernresonanz-Spektroskopie, die die Unterscheidung tertiärer Phosphine und der von ihnen abgeleiteten Phosphinoxide im Reaktionsgemisch problemlos ermöglicht.

Sobald die Umsetzung beendet ist, wird das Reaktionsgemisch mit Wasser verdünnt und aufgearbeitet. Hierzu stehen verschiedene Verfahren zur Verfügung. Nach einer bekannten Arbeitsweise neutralisiert man zunächst die schwefelsaure Losung. Sowohl bei der Verdünnung als auch bei der Neutralisation ist dafür Sorge zu tragen, daß eine Überhitzung des Reaktionsgemisches nicht eintritt; es hat sich bewährt, Temperaturen von 0 bis 40°C, insbesondere von 0 bis 20°C aufrechtzuerhalten. Zur Neutralisation verwendet man die wäßrige Lösung eines Alkalihydroxids, vorzugsweise des Natriumhydroxids. Alkalihydroxid-Konzentrationen von 20 bis 60 Gew.-%, bezogen auf die Lösung, haben sich bewährt. Um eine möglichst vollständige Abscheidung des aus Schwefelsäure und Alkalihydroxid gebildeten Alkalisulfats zu erreichen, ist es empfehlenswert, in nicht zu großer Verdünnung zu arbeiten. Aus dem neutralisierten Reaktionsgemisch scheidet sich Alkalisulfat ab. Es wird abfiltriert und mehrmals mit einem niederen Alkohol, vorzugsweise einem C₁- bis C₄-Alkohol, insbesondere Methanol, gewaschen. Das sulfonierte Arylphosphin gewinnt man aus dem Filtrat durch Entfernung des Wassers unter schonenden Bedingungen, z.B. durch Destillation im Vakuum einer Ölpumpe. Zur Reinigung löst man das erhaltene, kristalline Produkt erneut in wenig Wasser, versetzt die Lösung mit einem niederen Alkohol, vorzugsweise einem C₁- bis C₄-Alkohol, insbesondere Methanol, filtriert und entfernt wiederum schonend das Lösungsmittel.

Nach einem bevorzugten Verfahren extrahiert man die saure, wäßrige Lösung des Sulfonierungsproduktes mit der Lösung eines wasserunlöslichen Amins in einem wasserunlöslichen organischen Lösungsmittel. Auf diesem Wege erhält man sulfonierte Arylphosphine, die weitgehend frei von den im Sulfonierungsschritt zugesetzten Lewis-Säuren sind. Besonders bewährt hat sich diese Arbeitsweise bei Verwendung von Borsäure als Lewis-Säure.

Im einzelnen wird bei dieser Art der Aufarbeitung das Sulfonierungsgemisch unter Einhaltung der weiter oben genannten Temperaturen mit soviel Wasser versetzt, wie zur Verdünnung der vorhandenen Schwefelsäure auf 0,5 bis 50 Gew.-%, vorzugsweise 25 bis 35 Gew.-% nötig ist. Zu der verdünnten Lösung gibt man das in einem wasserunlöslichen organischen Lösungsmittel gelöste wasserunlösliche Amin. Die Konzentration der Amin-Lösung beträgt 1,0 bis 35 Gew.-%, vorzugsweise 10 bis 30 Gew.-% und insbesondere 13 bis 25 Gew.-% Amin, jeweils bezogen auf die Lösung.

Je Äquivalent Sulfonsäure verwendet man 0,5 bis 3,0 mol, vorzugsweise 0,5 bis 2,5 mol Amin. Der Einsatz überschüssigen Amins stellt sicher, daß nur geringe Phosphinverluste eintreten. Ein höherer Aminüberschuß als vorstehend angegeben ist zwar möglich, führt jedoch nicht zur Verbesserung des Ergebnisses der Trenn- bzw. Reinigungsoperation oder der Ausbeute.

Nach intensivem Mischen bilden sich zwei Phasen. Die spezifisch schwerere, wäßrige Phase enthält die Schwefelsäure und nahezu die gesamte Lewis-Säure, die sulfatarme und von Lewis-Säure annähernd freie organische Phase das Aminsalz des sulfonierten Phosphins, gelöst in dem organischen Lösungsmittel. Die beiden Phasen werden voneinander getrennt. Die organische Phase setzt man mit der Lösung einer anorganischen Base in Wasser um. Die Base gelangt hierbei in eine der gelösten Aminsalzmenge äquivalenten Menge zum Einsatz. Überschüssige Base ist zu vermeiden, weil sie das Endprodukt verunreinigt. Man erhält auf diese Weise unter Wiedergewinnung des wasserunlöslichen Amins die wäßrige Lösung des sulfonierten Arylphosphins. Das Amin steht für einen erneuten Einsatz zur Verfügung.

Das beschriebene Verfahren kann sowohl diskontinuierlich als auch kontinuierlich durchgeführt werden. Die für Stofftrennungen gebräuchlichen Apparate wie Gegenstromextraktionsanlagen, finden Anwendung.

Statt die in Wasser gelöste Base auf einmal der Lösung des Aminsalzes im organischen Medium zuzusetzen, kann die Zugabe nach einer bevorzugten Ausführungsform in Anteilen erfolgen. Diese Arbeitsweise wird mit Erfolg besonders dann eingesetzt, wenn die Auftrennung eines Sulfonierungsgemisches angestrebt wird, das Produkte verschiedener Sulfonierungsstufen enthält.

Als wasserunlösliche Amine, die zur Durchführung des Verfahrens eingesetzt werden, kommen wasserunlösliche homo- und heterocyclische, aliphatische, aromatische, araliphatische und vorzugsweise offenkettige, verzweigte oder unverzweigte aliphatische Amine mit 10 bis 60, vorzugsweise 13 bis 36 Kohlenstoffatomen in Betracht. Weniger geeignet sind Amine, deren Salze mit den Sulfonsäuren in dem organischen Lösungsmittel nicht oder nur beschränkt löslich sind. Als Beispiele für besonders bewährte Amine seien genannt: Tri-n-octylamin, Triisooctylamin, Tri-2-ethylhexylamin und Tridodecylamin.

Die Amine werden in einem wasserunlöslichen organischen Lösungsmittel gelöst. Geeignet sind insbesondere aliphatische oder aromatische Kohlenwasserstoffe oder Kohlenwasserstoffgemische, z.B. Toluol oder Kerosin, daneben auch C₄- bis C₂₀-Alkohole, C₈- bis C₂₀-Ether.

Als Basen für die Überführung der sulfonsauren Phosphine in die Wasserphase sind die Hydroxyde der Alkali- und Erdalkalimetalle, insbesondere Alkalihydroxid, Ammoniak, daneben auch die Alkalicarbonate, geeignet.

Die Aufarbeitung wird zweckmäßig im Bereich von Raumtemperatur bis etwa 40°C durchgeführt. Höhere Temperaturen ergeben keine Vorteile. Die Angaben über die Löslichkeit der Amine und der organischen Lösungsmittel im Wasser beziehen sich hierbei jeweils auf die Temperaturen, bei denen das Verfahren durchgeführt wird. Das Endprodukt wird entweder in der wäßrigen Lösung belassen oder durch Eindampfen oder durch Kristallisation, Dekantieren oder Abfiltrieren in fester Form gewonnen.

Das neue Verfahren wird in den nachfolgenden Beispielen erläutert, es ist jedoch nicht auf die beschriebene Ausführungsform beschränkt.

### Beispiel 1

### Sulfonierung von Triphenylphosphin

In einem Zweihalskolben mit Tropftrichter werden bei Raumtemperatur 5,0 g (81 mmol) handelsübliche Borsäure in 50 ml konzentrierter Schwefelsäure gelöst. Man rührt im Vakuum noch etwa 30 min nach und begast anschließend mit Argon. Im Säuregemisch gelöste, oxidierende Gase werden auf diese Weise vollständig entfernt. Dann kühlt man auf 0°C ab, gibt 15 g (57 mmol) Triphenylphospin zu, und evakuiert erneut. Nach 15 min hat sich das Phosphin vollständig gelöst. Unter Argonatmosphäre tropft man anschließend 250 ml Oleum (65 Gew.-% SO₃) zu unter Einhaltung einer Geschwindigkeit von etwa 6 ml/min und einer Temperatur der Reaktionsmischung von maximal 10°C. Nach beendeter Zugabe läßt man langsam auf Raumtemperatur erwärmen und rührt weitere 10 Tage. Sollte sich das Reaktionsgemisch infolge des hohen SO₃-Gehaltes verfestigen, so kann man bis zu 2 Tage auf maximal 43°C erwärmen.

Zur Aufarbeitung gibt man das Reaktionsgemisch in Argonatmosphäre auf Eis, das sich in einem 3 l-Büchnertrichter (oder einer Glasfritte) befindet. Als Vorlage dient ein 10 l-Rundkolben. Die gesamte Apparatur wird zuvor 10 min evakuiert und das Eis dadurch entgast. Um eine Überhitzung zu vermeiden ist darauf zu achten, daß das Oleum immer auf Eis tropft und nicht unmittelbar auf Wasser. Der Pegel des wäßrigen Hydrolysats im Trichter (oder in der Fritte) kann dazu in regelmäßigen Zeitabständen abgesenkt werden, indem im Vorlagekolben Unterdruck erzeugt wird. Ist das gesamte Gemisch hydrolysiert, wäscht man den Trichter (oder die Fritte) mit 25 %iger Natronlauge nach und neutralisiert unter Kühlung und intensivem Rühren die stark saure Lösung in der Vorlage. Dann engt man die Lösung im Wasserbad im Vakuum ein, bis Natriumsulfat in größerer Menge ausfällt. In diese Suspension gibt man unter intensivem Rühren 2 l Methanol und filtriert anschließend das in reichlicher Menge ausgefallene Natriumsulfat ab. Der Filterrückstand wird dreimal mit je 150 ml Methanol nachgewaschen und die vereinigten Filtrate werden bis zur Trockene eingeengt. Dann nimmt man den Rückstand in möglichst wenig (etwa 30 ml) Wasser auf und spritzt die Lösung unter Rühren in 250 ml Methanol. Man filtriert erneut ausgefallenes Natriumsulfat ab und engt im Vakuum bis zur Trockene ein.

Die Ergebnisse unterschiedlicher Versuche sind in der nachfolgenden Tabelle I zusammengestellt; die Versuche 1 bis 3 erfolgten unter Zusatz von Borsäure, die Versuche 4 bis 6 ohne Borsäurezusatz.

**Tabelle I**

| Sulfonierung von Triphenylphosphin | | | | | |
|---|---|---|---|---|---|
| Versuch Nr. | SO₃ in H₂SO₄ (Gew.-%) | Temperatur | Reaktionszeit | Oxidbildung | Anteil dreifach subst. Phosphins (%) |
| 1 | 42 | RT* | 72 h | keine | 50 |
| 2 | 42 | RT | 24 h | keine | 50 |
| 3 | 65 | RT,48h:43°C | 18 d | keine | 85 |
| 4 | 40 | RT | 42 h | erheblich | <10 |
| 5 | 65 | RT | 18 h | mäßig | ca.20 |
| 6 | 65 | RT | 72 h | vollständig | <5 |

| | | | | | |
|---|---|---|---|---|---|
| * RT = Raumtemperatur | | | | | |

Die Versuche zeigen, daß bei Raumtemperatur, 42 Gew.-% SO₃-Gehalt im Oleum und 72 h Reaktionszeit in Gegenwart von Borsäure keine Oxidbildung eintritt (Versuch 1), während unter ähnlichen Bedingungen ohne Borsäurezusatz schon nach 42 h erhebliche Mengen Oxid entstehen (Versuch 4). Noch drastischer sind die Unterschiede bei Einsatz von Oleum mit 65 Gew.-% SO₃-Gehalt. Selbst nach 18 d Reaktionsdauer, davon 2 d bei 43°C, bildet sich bei Anwesenheit von Borsäure kein Oxid (Versuch 3), demgegenüber wird das Ausgangsmaterial schon nach 72 h vollständig oxidiert, wenn man ohne Borsäurezusatz arbeitet.

### Beispiel 2

### Sulfonierung von 2,2'-Bis(diphenylphosphinomethyl)-1,1'-binaphthalin (NAPHOS)

In einem Zweihalskolben mit Tropftrichter werden bei Raumtemperatur 5.0 g (81 mmol) Borsäure in 50 ml konzentrierter Schwefelsäure gelöst. Man rührt im Vakuum noch etwa 30 min und begast anschließend mit Argon. Im Säuregemisch gelöste, oxidierende Gase werden auf diese Weise vollständig entfernt. Dann kühlt man auf 0°C ab, gibt 7.5 g NAPHOS (11,5 mmol) zu und evakuiert erneut. Nach etwa 15 min hat sich das Phosphin vollständig gelöst. Unter Argonatmosphäre tropft man anschließend 150 ml Oleum (65 Gew.-% SO₃) zu unter Einhaltung einer Geschwindigkeit von etwa 3 ml/min und einer Temperatur der Reaktionsmischung von maximal 10°C. Nach beendeter Zugabe läßt man langsam auf Raumtemperatur erwärmen und rührt noch weitere 60 h. Sollte sich das Reaktionsgemisch infolge des hohen SO₃-Gehalts verfestigen, so wird kurzzeitig auf 35°C erwärmt, um eine gute Durchmischung zu gewährleisten.

Zur Aufarbeitung gibt man das Reaktionsgemisch in Argonatmosphäre auf Eis, das sich in einem 3 l-Büchnertrichter (oder einer Glasfritte) befindet. Als Vorlage dient ein 10 l-Rundkolben. Die gesamte Apparatur wird 10 min evakuiert und das Eis dadurch entgast. Um eine Überhitzung zu vermeiden ist darauf zu achten, daß das Oleum immer auf Eis tropft und nicht unmittelbar auf Wasser. Der Pegel des wäßrigen Hydrolysats im Trichter (oder auf der Fritte) kann dazu in regelmäßigen Zeitabständen abgesenkt werden, indem im Vorlagekolben Unterdruck erzeugt wird. Ist das gesamte Gemisch hydrolysiert, wäscht man den Trichter (oder die Fritte) mit 25 %iger Natronlauge nach und neutralisiert unter Kühlung und intensivem Rühren die stark saure Lösung in der Vorlage. Dann engt man die Lösung im Wasserbad im Vakuum ein, bis Natriumsulfat in größerer Menge ausfällt. In diese Suspension gibt man unter intensivem Rühren 1 l Methanol und filtriert anschließend das in reichlicher Menge ausgefallene Natriumsulfat ab. Der Filterrückstand wird dreimal mit je 75 ml Methanol nachgewaschen und die vereinigten Filtrate werden bis zur Trockene eingeengt. Dann nimmt man den Rückstand in möglichst wenig (etwa 15 ml) Wasser auf und trennt das restliche Natriumsulfat mittels Gelchromatographie über Sephadex G-15 ab.

Die Ergebnisse sind der Tabelle II zu entnehmen.

**Tabelle II**

| Sulfonierung von NAPHOS | | | | | |
|---|---|---|---|---|---|
| Versuch | SO₃ in H₂SO₄ (Gew.-%) | Temperatur | Reaktionszeit (h) | Oxidbildung | Sulfonierungsgrad |
| 1 | 25 | 43°C | 12 | keine | |
| 2 | 25 | 70°C | 24 | vollständig | |
| 3 | 60 | RT* | 60 | 5 % | >6 |
| 4 | 40 | RT | 96 | 5 % | |
| 5 | 25 | 43°C | 12 | 15 % | |
| 6 | 25 | 43°C | 48 | 25 % | |

| | | | | | |
|---|---|---|---|---|---|
| * RT = Raumtemperatur | | | | | |

### Beispiel 3

### a) Sulfonierung von NAPHOS

In einem mit Rührer, Thermometer, Tropftrichter und Kühler ausgestatteten 1 l-Kolben werden unter Stickstoff-Atmosphäre 200 g konzentrierte Schwefelsäure vorgelegt und mit 26,1 g (422,3 mmol) Borsäure versetzt. Nach vollständiger Auflösung des Feststoffes werden zu der Lösung 27,7 g (42,6 mmol) NAPHOS gegeben. Das Gemisch wird 1 Stunde bei Raumtemperatur gerührt, anschließend werden 550,7 g (4474 mmol) Oleum (65 %ig) innerhalb von 30 min. zugetropft. Das homogene Reaktionsgemisch wird danach 72 Stunden bei Raumtemperatur gerührt.

Zur Aufarbeitung wird das Sulfonierungsgemisch (804,5 g) unter Stickstoff-Schutz in einen 3195,1 g Wasser von etwa 10°C enthaltenden 6 l-Kolben gegeben. Während der Zugabe wird die Innentemperatur durch intensive Kühlung zwischen 15 und 25°C gehalten.

Das Hydrolysegemisch (3999,6 g) mit einem Borsäure-Gehalt von 0,65 % (= 420,7 mmol) wird anschließend mit unterschiedlichen Mischungen aus Triisooctylamin (TIOA) und Toluol extrahiert.

### b) Extraktion

950 g Hydrolysegemisch mit einem Borsäure-Gehalt von 99,9 mmol werden mit den in der folgenden Tabelle III beschriebenen Mengen TIOA/Toluol 2 Stunden bei Raumtemperatur extrahiert.

**Tabelle III**

| Versuch | TIOA (g) | Toluol (g) | TIOA/Toluol (Gew.-Teile) | TIOA/NAPHOS* (mol) |
|---|---|---|---|---|
| 3.1 | 53,6 | 536,0 | 1 : 10 | 15 : 1 |
| 3.2 | 53,6 | 375,2 | 1 : 7 | 15 : 1 |
| 3.3 | 53,6 | 214,4 | 1 : 4 | 15 : 1 |
| 3.4 | 35,7 | 357,0 | 1 : 10 | 10 : 1 |

| | | | | |
|---|---|---|---|---|
| * NAPHOS: Ausgangsprodukt für BINAS | | | | |

Die nach Phasentrennung erhaltenen wäßrigen Abfallsäure-Phasen weisen die folgenden Borsäure-Gehalte auf (Tabelle IV):

**Tabelle IV**

| Versuch | Abfallsäure (g) | Borsäure | |
|---|---|---|---|
| | | (mmol) | (% v.E.*) |
| 3.1 | 926,1 | 99,3 | 99,4 |
| 3.2 | 926,1 | 98,3 | 98,4 |
| 3.3 | 926,0 | 97,9 | 98,0 |
| 3.4 | 931,4 | 98,8 | 98,9 |

| | | | |
|---|---|---|---|
| * E: Einsatz Borsäure | | | |

### Beispiel 4

Nach dem Verfahren von Beispiel 3 werden 10,1 g (15,5 mmol) NAPHOS und 7,6 g (123 mmol) Borsäure in 66,8 g konzentrierter Schwefelsäure gelöst und anschließend mit 221,5 g (1800 mmol) Oleum (65 %ig) versetzt. Nach 2 Stunden Reaktionszeit bei Raumtemperatur wird das Sulfonierungsgemisch (306,0 g) mit 1300,0 g Wasser hydrolysiert, der Borsäuregehalt des Hydrolysegemisches (1606,0 g) beträgt 0,47 % (= 122 mmol).

Das Hydrolysegemisch wird mit einer Lösung von 82,1 g (233 mmol) TIOA in 821,0 g Toluol 1 Stunde bei Raumtemperatur extrahiert. Die nach Phasentrennung anfallende Abfallsäure-Phase enthält 7,4 g (120 mmol) Borsäure.

Die organische Phase wird unter gleichzeitiger Messung des pH-Wertes mit einer handelsüblichen Glaselektrode nach und nach mit 1,5 %iger Natronlauge versetzt. Die im pH-Bereich bis 3,5 anfallende wäßrige Na-Salzlösung des Sulfonierungsgemisches wird abgetrennt und verworfen.

Die im pH-Bereich von 3,5 bis 11,1 erhaltene Wertproduktfraktion mit einem Borsäuregehalt von 0,22 mmol kann ohne weitere Reinigung als Bestandteil eines Katalysatorsystems für Hydroformylierungen verwendet werden.

### Beispiel 5

Entsprechend Beispiel 4 - jedoch mit einer Reaktionszeit von 6 Stunden - werden 1606,0 g Hydrolysegemisch mit einem Borsäuregehalt von 0,47 % (= 122 mmol) hergestellt.

Nach Aufarbeitung wie in Beispiel 4 enthält die Abfallsäurephase 7,5 g (121 mmol) Borsäure. In der Wertproduktfraktion (pH-Bereich von 3,5 bis 11,1) werden noch 0,14 mmol Borsäure nachgewiesen.

### Beispiel 6

### a) Sulfonierung von Triphenylphosphin

In einem mit Rührer, Thermometer, Tropftrichter und Kühler ausgestatteten 1 l-Kolben werden unter Stickstoff-Atmosphäre 1281,0 g (4,00 mol SO₃) Oleum (25 %ig) vorgelegt und mit 79,1 g (1,28 mol) Borsäure versetzt. Nach vollständiger Auflösung des Feststoffes werden zu der Lösung 83,6 g (0,32 mol) Triphenylphosphin gegeben. Das homogene Reaktionsgemisch wird 48 Stunden bei Raumtemperatur gerührt.

Zur Aufarbeitung wird das Sulfonierungsgemisch (1443,7 g) unter Stickstoff-Schutz in einen mit 2866,2 g Wasser von etwa 10°C enthaltenden 6 l-Kolben gegeben. Während der Zugabe wird die Innentemperatur durch intensive Kühlung zwischen 15 und 25°C gehalten.

Das Hydrolysegemisch (4309,9 g) mit einem Borsäure-Gehalt von 1,8 % (= 1276 mmol) wird anschließend mit unterschiedlichen Mischungen aus TIOA und Toluol extrahiert.

### b) Extraktion

800 g Hydrolysegemisch mit einem Borsäure-Gehalt von 237 mmol werden mit den in der folgenden Tabelle V beschriebenen Mengen TIOA/Toluol 1 Stunde bei 40°C extrahiert.

**Tabelle V**

| Versuch | TIOA (g) | Toluol (g) | TIOA/Toluol (Gew.-Teile) | TIOA/TPP (mol) |
|---|---|---|---|---|
| 6.1 | 75,8 | 303,4 | 1 : 4 | 1 : 3,6 |
| 6.2 | 94,8 | 379,2 | 1 : 4 | 1 : 4,5 |
| 6.3 | 75,8 | 530,6 | 1 : 7 | 1 : 3,6 |
| 6.4 | 75,8 | 758,0 | 1 : 10 | 1 : 3,6 |

Die nach Phasentrennung erhaltenen wäßrigen Abfallsäure-Phasen weisen die folgenden Borsäure-Gehalte auf (Tabelle VI):

**Tabelle VI**

| Versuch | Abfallsäure (g) | Borsäure | |
|---|---|---|---|
| | | (mmol) | (% v.E.) |
| 6.1 | 753,5 | 225 | 94,9 |
| 6.2 | 753,6 | 226 | 95,4 |
| 6.3 | 755,7 | 228 | 96,2 |
| 6.4 | 756,9 | 230 | 97,0 |

## Patentansprüche

1. Verfahren zur Herstellung sulfonierter Arylphosphine durch Sulfonierung Arylgruppen enthaltender Mono-, Di-, Oligo- oder Polyphosphine mit Oleum, dadurch gekennzeichnet, daß man die Sulfonierung bei Temperaturen zwischen 0 und 80°C in Gegenwart von Lewis-Säuren durchführt.

2. Verfahren nach Anspruch 1, dadurch gekennzeichnet, daß die Sulfonierung des Arylphosphins bei Temperaturen zwischen 10 und 50°C erfolgt.

3. Verfahren nach Anspruch 1 oder 2, dadurch gekennzeichnet, daß man zur Sulfonierung Oleum einer Lösung von Arylphosphin und Lewis-Säure in konzentrierter Schwefelsäure zusetzt.

4. Verfahren nach einem oder mehreren der Ansprüche 1 bis 3, dadurch gekennzeichnet, daß die Lewis-Säure eine Verbindung des Bors ist.

5. Verfahren nach Anspruch 4, dadurch gekennzeichnet, daß die Borverbindung Borsäure ist.

6. Verfahren nach einem oder mehreren der Ansprüche 1 bis 5, dadurch gekennzeichnet, daß die Lewis-Säure, bezogen auf die im zu sulfonierenden Arylphosphin enthaltenen P(III)-Atome, in mindestens molarer Menge eingesetzt wird.

7. Verfahren nach einem oder mehreren der Ansprüche 1, 2, 3, 5 und 6, dadurch gekennzeichnet, daß die Lösung von Arylphosphin in konzentrierter Schwefelsäure mit Borsäure gesättigt ist.

8. Verfahren nach einem oder mehreren der Ansprüche 1 bis 7, dadurch gekennzeichnet, daß das Sulfonierungsgemisch mit Wasser verdünnt und die erhaltene wäßrige Lösung mit der Lösung eines wasserunlöslichen Amins in einem wasserunlöslichen organischen Lösungsmittel extrahiert wird, wobei je chemischem Äquivalent Sulfonsäure 0,5 bis 3 mol des Amins angewandt werden, die organische Phase abgetrennt und mit der wäßrigen Lösung einer Base in innige Berührung gebracht, darauf die wäßrige Phase abgetrennt und aus dieser das sulfonierte Arylphosphin isoliert wird.

9. Verfahren nach Anspruch 8, dadurch gekennzeichnet, daß man das Sulfonierungsgemisch unter Aufrechterhaltung einer Temperatur zwischen 0 und 40°C, insbesondere 0 und 20°C mit soviel Wasser versetzt, wie zur Verdünnung der vorhandenen Schwefelsäure auf 0,5 bis 50 Gew.-%, vorzugsweise 25 bis 35 Gew.-%, nötig ist.

10. Verfahren nach Anspruch 8 oder 9, dadurch gekennzeichnet, daß man je chemisches Äquivalent Sulfonsäure 0,5 bis 2,5 mol Amin anwendet.

11. Verfahren nach einem oder mehreren der Ansprüche 8 bis 10, dadurch gekennzeichnet, daß die Konzentration des Amins in der Aminlösung 1,0 bis 35 Gew.-%, vorzugsweise 10 bis 30 Gew.-% und insbesondere 13 bis 25 Gew.-%, jeweils bezogen auf die Lösung, beträgt.

12. Verfahren nach einem oder mehreren der Ansprüche 8 bis 11, dadurch gekennzeichnet, daß die wasserunlöslichen Amine offenkettige, verzweigte oder unverzweigte aliphatische Amine mit 10 bis 60, vorzugsweise 13 bis 36 Kohlenstoffatomen sind.

13. Verfahren nach Anspruch 12, dadurch gekennzeichnet, daß das Amin Tri-n-Octylamin, Triisooctylamin, Diisooctylamin, Tri-2-Ethylhexylamin oder Tridodecylamin ist.

14. Verfahren nach einem oder mehreren der Ansprüche 8 bis 13, dadurch gekennzeichnet, daß das wasserunlösliche organische Lösungsmittel ein aliphatischer oder aromatischer Kohlenwasserstoff oder ein Kohlenwasserstoffgemisch ist.

15. Verfahren nach Anspruch 14, dadurch gekennzeichnet, daß das Lösungsmittel Toluol oder Kerosin ist.

## Claims

1. A process for preparing sulfonated arylphosphines by sulfonation of aryl-containing mono-, di-, oligo- or polyphosphines with oleum, which comprises carrying out the sulfonation at temperatures between 0 and 80°C in the presence of Lewis acids.

2. The process as claimed in claim 1, wherein the sulfonation of the arylphosphine is carried out at temperatures between 10 and 50°C.

3. The process as claimed in claim 1 or 2, wherein the sulfonation is carried out by adding oleum to a solution of arylphosphine and Lewis acid in concentrated sulfuric acid.

4. The process as claimed in one or more of claims 1 to 3, wherein the Lewis acid is a boron compound.

5. The process as claimed in claim 4, wherein the boron compound is boric acid.

6. The process as claimed in one or more of claims 1 to 5, wherein the Lewis acid is used in at least a molar amount based on the P(III) atoms contained in the arylphosphine to be sulfonated.

7. The process as claimed in one or more of claims 1, 2, 3, 5 and 6, wherein the solution of arylphosphine in concentrated sulfuric acid is saturated with boric acid.

8. The process as claimed in one or more of claims 1 to 7, wherein the sulfonation mixture is diluted with water and the aqueous solution obtained is extracted with the solution of a water-insoluble amine in a water-insoluble organic solvent, using from 0.5 to 3 mol of the amine per chemical equivalent of sulfonic acid, the organic phase is separated off and brought into intimate contact with the aqueous solution of a base, after which the aqueous phase is separated off and the sulfonated arylphosphine is isolated therefrom.

9. The process as claimed in claim 8, wherein the sulfonation mixture is, while maintaining a temperature between 0 and 40°C, in particular 0 and 20°C, admixed with the amount of water required to dilute the sulfuric acid present to from 0.5 to 50% by weight, preferably from 25 to 35% by weight.

10. The process as claimed in claim 8 or 9, wherein from 0.5 to 2.5 mol of amine are used per chemical equivalent of sulfonic acid.

11. The process as claimed in one or more of claims 8 to 10, wherein the concentration of the amine in the amine solution is from 1.0 to 35% by weight, preferably from 10 to 30% by weight and in particular from 13 to 25% by weight, in each case based on the solution.

12. The process as claimed in one or more of claims 8 to 11, wherein the water-insoluble amines are open-chain, branched or unbranched aliphatic amines having from 10 to 60, preferably from 13 to 36, carbon atoms.

13. The process as claimed in claim 12, wherein the amine is tri-n-octylamine, triisooctylamine, diisooctylamine, tri-2-ethylhexylamine or tridodecylamine.

14. The process as claimed in one or more of claims 8 to 13, wherein the water-insoluble organic solvent is an aliphatic or aromatic hydrocarbon or a hydrocarbon mixture.

15. The process as claimed in claim 14, wherein the solvent is toluene or kerosine.

## Revendications

1. Procédé de préparation d'arylphosphines sulfonées par sulfonation de mono-, di-, oligo- ou polyphosphines contenant des groupes aryle avec de l'oléum, caractérisé en ce que l'on conduit la sulfonation à des températures situées entre 0 et 80°C en présence d'acides de Lewis.

2. Procédé selon la revendication 1, caractérisé en ce que la sulfonation de l'arylphosphine a lieu à des températures situées entre 10 et 50°C.

3. Procédé selon la revendication 1 ou 2, caractérisé en ce que, pour la sulfonation, on ajoute l'oléum à une solution d'arylphosphine et d'acide de Lewis dans l'acide sulfurique concentré.

4. Procédé selon une ou plusieurs des revendications 1 à 3, caractérisé en ce que l'acide de Lewis est un composé du bore.

5. Procédé selon la revendication 4, caractérisé en ce que le composé du bore est l'acide borique.

6. Procédé selon une ou plusieurs des revendications 1 à 5, caractérisé en ce que l'acide de Lewis est utilisé en quantité au moins molaire par rapport aux atomes de P(III) contenus dans l'arylphosphine à sulfoner.

7. Procédé selon une ou plusieurs des revendications 1, 2, 3, 5 et 6, caractérisé en ce que la solution d'arylphosphine dans l'acide sulfurique concentré est saturée d'acide borique.

8. Procédé selon une ou plusieurs des revendications 1 à 7, caractérisé en ce que le mélange de sulfonation est dilué à l'eau et la solution aqueuse obtenue est extraite avec la solution d'une amine insoluble dans l'eau dans un solvant organique insoluble dans l'eau, où 0,5 à 3 mol d'amine sont utilisées par équivalent chimique d'acide sulfonique, la phase organique est séparée et est mise en contact intime avec la solution aqueuse d'une base, puis la phase aqueuse est séparée et l'arylphosphine sulfonée est isolée à partir de celle-ci.

9. Procédé selon la revendication 8, caractérisé en ce que l'on ajoute au mélange de sulfonation, en maintenant une température située entre 0 et 40°C, en particulier 0 et 20°C, une quantité d'eau nécessaire pour la dilution de l'acide sulfurique présent à 0,5 à 50 % en masse, de préférence à 25 à 35 % en masse.

10. Procédé selon la revendication 8 ou 9, caractérisé en ce que l'on utilise par équivalent chimique d'acide sulfonique 0,5 à 2,5 mol d'amine.

11. Procédé selon une ou plusieurs des revendications 8 à 10, caractérisé en ce que la concentration de l'amine dans la solution d'amine est de 1,0 à 35 % en masse, de préférence de 10 à 30 % en masse et en particulier de 13 à 25 % en masse, à chaque fois par rapport à la solution.

12. Procédé selon une ou plusieurs des revendications 8 à 11, caractérisé en ce que les amines insolubles dans l'eau sont des amines aliphatiques linéaires, ramifiées ou non ramifiées ayant 10 à 60, de préférence 13 à 36 atomes de carbone.

13. Procédé selon la revendication 12, caractérisé en ce que l'amine est la tri-n-octylamine, la triisooctylamine, la diisooctylamine, la tri-2-éthylhexylamine ou la tridodécylamine.

14. Procédé selon une ou plusieurs des revendications 8 à 13, caractérisé en ce que le solvant organique insoluble dans l'eau est un hydrocarbure aliphatique ou aromatique ou un mélange d'hydrocarbures.

15. Procédé selon la revendication 14, caractérisé en ce que le solvant est le toluène ou le kérosène.
